Europäisches Patentamt

European Patent Office

Office européen des brevets

(19)

(11) Publication number: **0 050 498**
A1

# EUROPEAN PATENT APPLICATION

(12)

(21) Application number: 81304847.7

(22) Date of filing: 16.10.81

(51) Int. Cl.³: **C 08 F 10/00,** C 08 F 4/64,
C 08 F 4/02

(30) Priority: 17.10.80 JP 144494/80

(43) Date of publication of application: 28.04.82
Bulletin 82/17

(84) Designated Contracting States: **DE FR GB IT NL**

(71) Applicant: **TOA NENRYO KOGYO K.K.,**
**1-1 Hitotsubashi, 1-Chome Chiyoda-Ku, Tokyo (JP)**

(72) Inventor: **Imai, Masafumi, 1902-5 Ooaza Kemekubo**
**Ooi-machi, Iruma-gun Saitama-ken (JP)**
Inventor: **Miyazaki, Makoto, 1902-5 Ooaza Kamekubo**
**Ooi-machi, Iruma-gun Saitama-ken (JP)**
Inventor: **Imai, Chihiro, 49-5 Utsukushigaoka 4-Chome**
**Midori-ku, Yokohama-shi Kanagawa-ken (JP)**
Inventor: **Yoda, Makoto, 5024-270 Ooaza Kasahata**
**Kawagoe-shi, Saitama-ken (JP)**

(74) Representative: **Northover, Robert Frank et al, Esso**
**Chemical Research Centre P.O. Box 1, Abingdon**
**Oxfordshire, OX13 6BB (GB)**

(54) **Catalyst component, its preparation and use in polymerization of alpha-olefins.**

(57) A supported titanium containing catalyst component for use in propylene polymerization is prepared by co-pulverizing a magnesium halide, an aromatic carboxylic acid ester and an aromatic carboxylic acid or a derivative thereof such the halide or anhydride and contacting the magnesium-containing solid with a titanium compound. The polymerization of propylene in the presence of a catalyst comprising this component and an organoaluminum compound produces polypropylene of high bulk density.

EP 0 050 498 A1

CATALYST COMPONENT, ITS PREPARATION AND USE IN POLYMERIZATION OF ALPHA-OLEFINS

This invention relates to catalyst components for polymerization of alpha-olefins, their preparation use. More particularly, this invention relates to supported titanium catalyst components which can produce a polymer powder having a high bulk density at a high yield and a method for using them.

Heretofore, where an olefin polymer, and especially polypropylene, is produced using a Ziegler-Natta catalyst, many attempts have been made to obtain a catalyst having a high activity and exhibiting high stereo-regularity, with the ultimate view of making the thus obtained polymer serviceable as a product without any further treatment.

In recent years, supported catalysts based on titanium compounds supported on various supports, especially magnesium compounds, have been developed for the purpose of enhancing the polymerization capability per unit weight of titanium in a titanium component which is useful as a catalyst component, and accordingly good results are being acheived, but the ultimate catalyst has not yet been obtained.

As regards supported catalysts utilizing a magnesium compound, especially magnesium chloride, as a support, in order to enhance the catalytic activity by increasing the active sites of the catalyst, many attempts have been made to pulverize the support into fine particles by mechanically grinding a mixture of magnesium chloride and other components.

For example, there are known methods for preparing catalyst components, such as a method which comprises co-grinding magnesium chloride and an aromatic carboxylic acid ester and subsequently treating by bringing the mixture into contact with titanium tetrachloride (Japanese Patent Application Laid-open No. 126590/1975), a method which comprises co-grinding magnesium chloride and an aromatic carboxylic acid ester and subsequently treating by bringing the mixture into contact with a mixture or an addition reaction product of titanium tetrachloride and an acyl halide (Japanese Patent Application Laid-open No. 17988/1979), a method comprises co-grinding magnesium chloride and an acyl halide and subsequently treating by bringing the mixture into contact with a mixture or an addition reaction product of titanium tetrachloride and an ether (Japanese Patent Application Laid-open No. 277/1978) etc.

However, since any of these methods prepares a catalyst component by grinding a support, there have been problems with the resulting catalyst component, i.e. it has a large content of fine powders, it shows a

0050498

- 2 -

wide particle size distribution and the shape of each particle is irregular. The polymer obtained from polymerizing an alpha-olefin in the presence of such a catalyst is a fine powder of low bulk density and shows a wide particle size distribution. The catalyst activity furthermore cannot be said to be sufficiently high.

It is an object of the invention to provide a catalyst component which exhibits a higher activity and higher stereo-regularity, and can produce a polyolefin powder, especially polypropylene, having a high bulk density.

In accordance with the present invention there is provided a catalyst component for polymerization of alpha-olefins which is formed by bringing a magnesium containing solid obtained by co-grinding (a) a magnesium halide, (b) and aromatic carboxylic acid ester and (c) an aromatic carboxylic acid, aromatic carboxylic acid halide or aromatic carboxylic anhydride into contact with a titanium compound. The invention also provides a catalyst composed of the above catalyst component and an organic aluminum compound, and a method for polymerizing alpha-olefins which is characterized by homopolymerizing an alpha-olefin or copolymerizing it with ethylene or other alpha-olefin in the presence of such a catalyst.

Although the reason why a polymer having an improved bulk density is obtained when using the present catalyst component is not completely understood, this unexpected effect is exhibited by the combination of Components (b) and (c). It may be postualted that the combination of Components (b) and (c) results in a material or a reaction mechanism with the characteristics of a binder, so that at the time of contact of Components (a), (b) and (c) as well as at the time of subsequent contact thereof with a titanium compound, the fine particles of the supported catalyst are tightly attached together.

As the magnesium halide, there may be mentioned magnesium di-halides, i.e. magnesium chloride, magnesium bromide and magnesium iodide, among which magnesium chloride is particularly preferred.

For the convenience of use, these magnesium halides are advantageously employed as a powder having in general an average particle diameter of 1-50 $\mu$ although that of a greater particle diameter can also be employed.

Further, these magnesium halides are preferably those which contain substantially no water of crystallization, i.e. the so called anhydrides. Therefore, where a commercially available product is to be used, it is desirable to treat the magnesium halide by heating at 200-600°C in the presence of an inert gas such as nitrogen or at 100-400°C under reduced pressure.

Included among suitable aromatic carboxylic acid esters are aromatic monocarboxylic acid esters having no substituents on the aromatic ring and aromatic monocarboxylic acid esters having one or more substituents on the aromatic ring.

Specific examples of the aromatic monocarboxylic acid esters having no substituent on the aromatic ring include benzoic acid alkyl esters such as methyl benzoate, ethyl benzoate, n-propyl benzoate, isopropyl benzoate, n-butyl benzoate, isobutyl benzoate, tert-butyl benzoate, n-amyl benzoate, isoamyl benzoate, n-hexyl benzoate, n-octyl benzoate and 2-ethyl-hexyl benzoate benzoic acid cycloalkyl esters such as cyclopentyl benzoate and cyclohexyl benzoate, benzoic acid aryl esters such as phenyl benzoate, 4-tolyl benzoate and benzyl benzoate.

Examples of aromatic monocarboxylic acid esters having a substituent or substituents on the aromatic ring are hydroxybenzoic acid esters in which the subsitiuent is a hydroxyl group, alkoxybenzoic acid esters in which the substituent is an alkoxy group and alkylbenzoid acid esters in which the substituent is an alkyl group.

Illustrative examples of the hydroxybenzoic acid esters include methyl p-hydroxybenzoate, ethyl p-hydroxybenzoate, n-propyl p-hydroxybenzoate, isobutyl p-hydroxybenzoate, isoamyl p-hydroxybenzoate, n-hexyl p-hydroxybenzoate, 2-ethylhexyl p-hydroxybenzoate, cyclohexyl p-hydroxybenzoate, phenyl p-hydroxybenzoate, 3-tolyl p-hydroxybenzoate, methyl salicylate, ethyl salicylate, isobutyl salicylate, isoamyl salicylate and phenyl salicylate.

Illustrative examples of the alkoxybenzoic acid esters include methyl anisate, ethyl anisate, isopropyl anisate, isobutyl anisate, phenyl anisate, ethyl o-methoxybenzoate, methyl p-ethoxybenzoate, ethyl p-ethoxybenzoate, n-butyl p-ethoxybenzoate and phenyl p-ethoxybenzoate .

Illustrative examples of the alkylbenzoic esters include methyl p-toluylate, ethyl p-toluylate, isopropyl p-toluylate, isobutyl p-toluylate, isoamyl p-toluylate, phenyl p-toluylate, methyl p-ethylbenzoate ethyl p-ethylbenzoate and secondary butyl p-ethylbenzoate.

Among the above-described aromatic carboxylic acid esters, preferred are methyl benzoate, ethyl benzoate, methyl p-hydroxybenzoate, ethyl p-hydroxybenzoate, methyl anisate, ethyl anisate, methyl p-touylate and ethyl p-toluylate.

As illustrative examples of the aromatic carboxylic acid, there may be mentioned aromatic monocarboxylic acids such as benzoic acid, p-hydroxybenzoic acid, salicylic acid, p-methoxybenzoic acid, o-methoxybenzoic acud, p-ethoxybenzoic acid, p-toluic acid, p-ethylbenzoic acid and aromatic dicarboxylic acids such as phthalic acid.

As illustrative examples of the aromatic carboxylic acid halide, there may be mentioned acid chlorides such as benzoyl chloride, p-toluoyl chloride, anisonyl chloride, p-ethylbenzoyl chloride and alpha-naphthoyl chloride acid bromides such as benzoyl bromide, p-toluoyl bromide and p-naphthoyl bromide acid iodides such as benzoyl iodide. Among these aromatic carboxylic acid halides, the acid chlorides are preferred, benzoyl chloride being particularly preferred.

As illustrative examples of the aromatic carboxylic anhydride, there may be mentioned benzoic anhydride, p-toluic anhydride, p-ethylbenzoic anhydride and anisic anhydride. Among those benzoic anhydride is preferred.

The magnesium containing solid may be obtained by co-grinding (a) a magnesium halide, (b) an aromatic carboxylic acid ester and (c) an aromatic carboxylic acid, an aromatic carboxylic acid halide or an aromatic carboxylic anhydride. In addition to the manner of using the above three components simultaneously, the co-grinding can also be effected by co-grinding two of the three first and then adding the remaining compound and co-grinding.

The means for co-grinding may be a grinding machine conventionally employed for obtaining a pulverized product, for example, a rotary ball mill, a vibration ball mill or an impact ball mill.

The co-grinding operation is desirably performed in vacuum or in an atmosphere of an inert gas and in the substantial absence of moisture and oxygen.

The conditions for co-grinding are not limited, but in general, the co-grinding temperature is 0-200°C and the co-grinding time is, depending on the kind of the grinding machine, 0.5-100 hours.

The co-grinding treatment may also be effected in the presence of an inert hydrocarbon such as hexane, heptane, octane, cyclohexane, benzene, toluene or xylene.

The proportion of (a) the magnesium halide, (b) the aromatic carboxylic acid ester and (c) the aromatic carboxylic acid, the aromatic carboxylic acid halide or the aromatic carboxylic anhydride used is preferably such that (b)/(c) (molar ratio) is about 0.1 to about 10 and (b)+(c)/(a)+(b)+(c) is about 5 to about 50% by weight.

The thus obtained magnesium containing solid may be used as the starting material for the catalyst component of this invention either as such or after being washed by an inert hydrocarbon such as hexane, heptane, octane, cyclohexane, benzene, toluene or xylene as needed.

The titanium compound is a compound of divalent, trivalent or tetravalent titanium. Illustrative examples thereof include titanium tetrachloride, titanium tetrabromide, trichloroethoxytitanium, trichlorobutoxytitanium, dichlorodiethoxytitanium, dichlorodibutoxytitanium, dichlorodiphenoxytitanium, chlorotriethyoxytitanium, chlorotributoxytitanium, tetrabutoxytitanium and titanium trichloride. Among those, tetravalent titanium halides such as titanium tetrachloride, trichloroethoxytitanium, dichlorodibutoxytitanium and dichlorodiphenoxytitanium are preferred and titanium tetrachloride is particularly preferred.

While the contact of the magnesium containing solid and the titanium compound may be effected in any manner, for example, by such means as mixing and stirring both components or by a mechanical grinding means utilizing a rotary ball mill, it is particularly desirable to add the titanium compound to the magnesium-containing solid and stir to contact them at a contacting temperature in the range of from 0°C to the boiling point of the titanium compound (136.4°C for titanium tetrachloride) and a contacting time of 0.5-20 hours. In addition, the contact may be conducted in the presence of an inert solvent, such as hexane, heptane, octane, cyclohexane, benzene, toluene, xylene, carbon tetrachloride or 1,2-dichloroethane.

The amount of the magnesium containing solid to be used relative to the titanium compound or a mixture of the titanium compound and the inert solvent is suitably from 30 to 300 g/l. Further, contact of the magnesium containing solid with the titanium compound need not be limited to a single contacting operation but may be effected two or more times.

In addition, the solid material obtained by bringing the magnesium containing solid and the titanium compound into contact with each other may be brought into contact with a hydrocarbon such as hexane, heptane, octane, cyclohexane, benzene, toluene or xylene and/or a halogenated hydrocarbon. Examples of the halogenated hydrocarbon used on this occasion include methyl chloride, methyl bromide, methyl iodide, methylene chloride, methylene bromide, methylene iodide, chloroform, bromoform, idoform, carbon tetrachloride, carbon tetrabromide, carbon tetraiodide, ethyl chloride, ethyl bromide, ethyl iodide, 1,2-dichloroethane, 1,2-dibromoethane, 1,2-diiodoethane, methylchloroform, methylbromoform, methyliodoform, 1,1,2-trichloroethylene, 1,1,2-tribromoethylene 1,1,2-tetrachloroethylene, pentachloroethane, hexachloroethane, hexabromoethane n-propyl chloride, 1,2-dichloropropane, hexachloropropylene, octachloropropane, decabromodecane and the chlorinated paraffins; alicyclic compounds such as chlorocyclopropane, tetrachlorocyclopentane, hexachloropentadien and hexachlorocyclohexane; and aromatic compounds such as chlorobenzene, bromobenzene, o-dichlorobenzene, p-dichorobenzene, hexachlorobenaene, hexabromobenzene, benzotrichloride and p-chlorobenzotrichloride.

The preferred conditions for contact with such a hydrocarbon and/or halogenated hydrocarbon employ said hydrocarbon and/or siad halogenated hydrocarbon in an amount in the range of from 0.5 to 50 times by weight that of said solid material, desirably at a contacting temperature of from 20 to 200°C and preferably for a period of from 0.5 to 20 hours.

The solid material obtained as above may be separated from the reaction system, washed with the aforementioned inert hydrocarbon as needed, and dried to provide the catalyst component of this invention.

The catalyst component of this invention is combined with an organic aluminum compound to obtain a catalyst for homopolymerizing an alpha-olefin or copolymerizing an alpha-olefin with ethylene or other alpha-olefin.

The organic aluminum compound compound to be combined with the catalyst component in polymerizing an alpha-olefin is represented by the general formula: $R_nAlX_{3-n}$ wherein R represents an alkyl group or an aryl group, X represents a halogen atom, an alkoxy group or a hydrogen atom and n is any number in the range of $1 \leqslant n \leqslant 3$. Particularly preferred are alkyl-aluminum compounds having 1-18 carbon atoms, preferably 2-6 carbon atoms, such as trialkylaluminums, dialkylaluminum monohalides, monoalkylaluminum dihalides, alkylaluminum sesquihalides, dialkylaluminum mono-

0050498

alkoxides and dialkylaluminum monohydrides or a mixture or complex compound thereof. Specific examples thereof include trialkylaluminums such as trimethylaluminum, triethylaluminum, tripropylaluminum, triisobutylaluminum and trihexylaluminum, dialkylaluminum monohalides such as dimethylaluminum chloride, diethylaluminum chloride, diethylaluminum bromide, diethylaluminum iodide and diisobutylaluminum chloride, monoalkylaluminum dihalides such as methylaluminum dichloride, ethylaluminum dichloride, ethylaluminum dibromide, ethylaluminum diiodide and isobutylaluminum dichloride, alkylaluminum sesquihalides such as ethylaluminum sesquichloride, dialkylaluminum monoalkoxides such as dimethylaluminum methoxide, diethylaluminum ethoxide, diethylaluminum phenoxide, dipropylaluminim ethoxide and diisobutylaluminum ethoxide and diisobutylaluminum phenoxide, dialkylaluminum hydrides such as dimethylaluminum hydride, diethylaluminum hydride, dipropylaluminum hydride and diisobutylaluminum hydride.

Among those trialkylaluminums, trethylaluminum and triisobutylaluminum are particularly preferred. In addition, these trialkylaluminums may be used in combination with other organic aluminum compounds, for example, industrially easily available diethylaluminum chloride, ethylaluminum dichloride, ethylaluminum sesquichloride, diethylaluminum ethoxide, diethylaluminum hydride, or a mixture or complex compound thereof.

Further, the organic aluminum compounds are desirably used in combination with an electron donating compound, although they can be used alone. As the electron donating compound, there may be mentioned carboxylic acids, carboxylic acid esters, alcohols, ethers, ketones, amines, amides, nitriles, aldehydes, alcoholates, phosphorus, arsenic or antimony compounds in which each such element is attached directly or via carbon or oxygen to the organic group, phosphamides, thioethers, thioesters and carbonic acid esters, among which the carboxylic acid esters are preferably employed.

Illustrative examples of the carboxylic acid esters include butyl formate, ethyl acetate, butyl acetate, ethyl acrylate, ethyl butyrate, isobutyl isobutyrate, methyl methacrylate, diethyl maleate, diethyl tartrate, ethyl cyclohexanecarboxylate, ethyl benzoate, ethyl p-methoxybenzoate, methyl p-methylbenzoate, ethyl p-tert-butylbenzoate, dibutyl phthalate, diallyl phthalate and ethyl alpha-naphthoate. Among those, preferably employed are alkyl esters of aromatic carboxylic acids, especially alkyl esters of benzoic acid or nucleus-substituted benzoic acids such as p-methylbenzoic acid or p-methoxybenzoic acid in which the alkyl is of 1-8 carbon atoms. Any of these electron donating compounds may be used when the organic aluminum compound is used in combination with the catalyst component or may be used after it has been brought into contact with the organic aluminum compound.

The amount of the organic aluminum compound to be used relative to the catalyst component of this invention is generally from 1 to 2000 moles per gram atom of titanium in said catalyst component, and from 20 to about 500 moles is particularly preferred.

Further, the mixing ratio of the organic aluminum compound and the electron donating compound is chosen in such range that the organic aluminum compound calculated as aluminum is present in an amount of from 0.1 to 40 gram atoms, preferably from 1 to 25 gram atoms, per mole of the electron donating compound.

The thus obtained catalyst composed of the catalyst component and the organo aluminum compound (and the electron donating compound) exhibits excellent performance as a catalyst for homopolymerization of alpha-olefins having 3-6 carbon atoms, for example, propylene, butene-1, 4-methylpentene-1 and hexene-1 and random and block copolymerizations of the above mentioned alpha-olefins with one another and/or with ethylene.

The polymerization reaction may be conducted either in the gaseous phase or in the liquid phase, and in the latter case, it may be conducted either in an inert hydrocarbon or in a liquid monomer. Suitable solvents which can be used in polymerization in a solvent are selected from inert hydrocarbons such as hexane, heptane, cyclohexane, benzene, toluene and xylene. The reaction temperature is generally in the range of from -80°C to 150°C, preferably 40°C to 100°C. The pressure may be, for example, from 1-40 atmospheres. Molecular weight control during polymerization may be effected by use of hydrogen or other known molecular weight modifiers.

When ethylene is used as comonomer in copolymerization, its amount is preferably chosen from the range of up to 30% by weight based on the alpha-olefin, especially 1-15% by weight.

The polymerization reaction using the catalyst system according to this invention is conducted either on a continuous basis or in a batchwise manner. Conditions may be the same as those commonly employed.

The process of this invention is particularly effective for production of isotactic polypropylene, a random copolymer of ethylene and propylene and a block copolymer of ethylene and propylene.

The polymerization catalyst utilizing the catalyst component of this invention has a high polymerization activity and high stereoregularity, and the resulting alpha-olefin polymer powder has a high bulk density and manifests excellent free-flowing properties.

This invention is more particularly described by the following examples. However, this invention is not limited to these examples. In the examples, the percent (%) is by weight unless stated otherwise. The polymerization activity Kc is the amount of the polymer produced (g) per gram of the catalyst (g), and Kt is the amount of the polymer produced (kg) per gram of Ti in the catalyst. The heptane insolubles (hereinafter referred to as HI) which indicates the proportion of the crystalline polymer in the polymer product, is the amount of the residue when extracted with boiling n-heptane on a modified Soxhlet's extractor. The melt flow rate (MFR) was measured according to ASTM-D 1238. The bulk density was measured according to ASTM-D 1895-69 Method A.

Example 1

Preparation of the Magnesium Containing Solid

To a stainless steel (SUS 32) mill pot having an internal volume of 300 ml and containing 100 stainless steel (SUS 32) balls of 10 mm in diameter were added, under nitrogen gas atmosphere, 22.0 g of anhydrous magnesium chloride, 3.6 ml (24.2mmol) of ethyl benzoate and 5.6 g (24.8 mmol) of benzoic anhydride. The mill pot was fitted in a shaker, and the contact was conducted by shaking for 15 hours to obtain the magnesium containing solid.

Preparation of the Catalyst Component

4.9 g of the magnesium containing solid was added to a 200 ml glass reactor equipped with a stirrer under nitrogen atmosphere and 100 ml of titanium tetrachloride was added thereto, followed by stirring at 120°C for 2 hours. The resulting solid material was filtered out at 120°C, washed with 100 ml portions of n-hexane at 65°C seven times, and dried at 50°C under reduced pressure for one hour to obtain the catalyst component. This catalyst component contained 2.2% of titanium atoms.

Polymerization of Propylene

To a stainless steel (SUS 32) autoclave having an internal volume of one liter and equipped with a stirrer was added under nitrogen gas atmosphere a mixture of 45.7 mg of the catalyst component obtained above, 6.0 ml of a n-heptane solution containing 1 mole of triethylaluminum (hereinafter referred to as TEAL) in one liter of n-heptane, the amount of which corresponded to 280 gram atoms calculated as aluminum per gram atom of titanium in the catalyst component and 0.26 ml of ethyl p-methoxybenzoate, the amount of which corresponded to 0.3 mole per gram atom of aluminum in said TEAL, said mixture being held for 5 minutes before charging. Thereafter, 0.6 liter of hydrogen gas as a molecular weight modifier and 0.8 liter of liquified propylene were charged under pressure, after which the temperature of the reaction system was raised to 68°C and polymerization of propylene was conducted for 30 minutes. After completion of the polymerization, the unreacted propylene was purged, to obtain 173 g of a white polypropylene powder (Kc = 3790, Kt = 172) having an HI of 94.5%, an MFR of 2.1 and a bulk density of $0.37 g/cm^3$.

Example 2

Preparation of the Magnesium Containing Solid

Procedures similar to those in Example 1 were followed except that 20.9 g of anhydrous magnesium chloride, 4.7 ml (32.9 mmol) of ethyl benzoate and 4.5 g (36.8 mmol) of benzoic acid were employed and the contacting time was 15 hours, to obtain the magnesium containing solid.

Preparation of the Catalyst Component

Using the magnesium containing solid obtained above, procedures similar to those in Example 1 were followed, to prepare the catalyst component having a titanium content of 2.7%.

Polymerization of Propylene

Polymerization of propylene was conducted by procedures similar to those in Example 1 except that a polymerization catalyst formed from 51.6 mg of the above catalyst component, 8.2 ml of a n-heptane solution of TEAL (280 gram atoms as aluminum per gram atom of titanium in the catalyst component) and 0.36 ml of ethyl p-methoxybenzoate (0.30 mole per gram atom of aluminum in TEAL) was used, to obtain the results of an HI of 95.2%, an MFR of 1.4, a bulk density of $0.37 g/cm^3$, a Kc of 3710 and a Kt of 137.

Example 3

Preparation of the Magnesium Containing Solid

Procedures similar to those in Example 1 were followed except

that 26.1 g of anhydrous magnesium chloride, 5.5 ml (38.5 mmol) of ethyl benzoate and 5.5 g (39.1 mmol) of benzoyl chloride were employed and the contacting time was 16.5 hours, to obtain the magnesium containing solid.

Preparation of the Catalyst Component

Procedures similar to those in Example 1 were followed except that 5.6 g of the magnesium containing solid obtained above and a mixture of 80 ml of titanium tetrachloride and 55 ml of toluene were brought into contact at 105°C for 2 hours, the resulting solid was separated and this solid was further brought into contact with 120 ml of titanium tetrachloride at 120°C for 2 hours, to obtain the catalyst component having a titanium content of 2.3%.

Polymerization of Propylene

Polymerization of propylene was conducted by procedures similar to those in Example 1 except that a polymerization catalyst formed from 73.8 mg of the above catalyst component, 9.6 ml of a heptane solution of TEAL (270 gram atoms as aluminum per gram atom of titanium in the catalyst component) and 0.43 ml of ethyl p-methoxybenzoate (0.30 mole per gram atom of aluminum in TEAL) was used, to obtain the results of an HI of 95.0%, an MFR of 2.1, a bulk density of 0.37 g/cm$^3$, a Kc of 2750 and a Kt of 120.

Comparative Example 1

Preparation of the Magnesium Containing Solid

Procedures similar to those in Example 1 were followed except that 21.1 g of anhydrous magnesium chloride and 4.8 ml of ethyl benzoate were only used and the contacting time was 15 hours, to obtain the magnesium containing solid.

Preparation of the Catalyst Component

Procedures similar to those in Example 1 were followed except that 5.0 g of the magnesium containing solid obtained above was used, to prepare the catalyst component having a titanium content of 1.8%.

Polymerization of Propylene

Using the above catalyst component, polymerization of propylene was conducted similarly as in Example 1, to obtain the results of an HI of 93.7%, a bulk density of 0.30 g/cm$^3$, a Kc of 1650 and a Kt of 92.

Comparative Example 2

Preparation of the Magnesium Containing Solid

Procedures similar to those in Example 3 were followed except that 19.4 g of anhydrous magnesium chloride and 6.1 g of benzoyl chloride were only used and the contacting time was 15 hours, to obtain the magnesium containing solid.

Preparation of the Catalyst Component

Procedures similar to those in Example 1 were followed except that 5.5 g of the magnesium containing solid obtained above was used, to prepare the catalyst component having a titanium content of 2.9%.

Polymerization of Propylene

Using the above catalyst component, polymerization of propylene was conducted similarly as in Example 1, to obtain the results of an HI of 92.9%, a bulk density of 0.31 g/cm$^3$, a Kc of 1090 and a Kt of 55.

CLAIMS:

1. A process for preparing a catalyst component from a titanium compound and a magnesium compound characterized by co-grinding:
   (a) a magnesium halide
   (b) an aromatic carboxylic ester and
   (c) an aromatic carboxylic acid aromatic carboxylic acid halide or an aromatic carboxylic anhydride; and thereafter contacting the formed magnesium-containing solid with a titanium compound.

2. A process according to claim 1 in which the magnesium halide, the aromatic carboxylic acid ester and the aromatic carboxylic acid, aromatic carboxylic halide or aromatic carboxylic anhydride are co-ground simultaneously.

3. A process according to claim 1 in which the magnesium halide and the aromatic carboxylic acid ester are co-ground and the product thereof is co-ground with the aromatic carboxylic acid, aromatic carboxylic acid halide or aromatic carboxylic anhydride.

4. A process according to any of claims 1 to 3 in which the molar ratio of (b)/(c) is from 0.1 to 10.

5. A process according to any of claims 1 to 4 in which the ratio of (a)+(c)/(a)+(b)+(c) is from 5 to 50% by weight.

6. A catalyst compound for polymerization of alpha-olefins characterized in that it is prepared by the process of any of claims 1 to 5.

7. A catalyst for the polymerization of alpha-olefins said catalyst comprising: (a) a catalyst component according to claim 6 and (b) an organoaluminum compound represented by the general formula:
$R_m AlX_{3-m}$ wherein R represents an alkyl group or an aryl group, X represents a halogen atom, an alkoxy group or an aryl group, X represents a halogen atom, an alkoxy group or a hydrogen atom and m is any number within the range of $1 \leqslant m \leqslant 3$.

8. A method for homopolymerizing an alpha-olefin or co-polymerizing an alpha-olefin with other alpha-olefin/s and/or with ethylene characterized in that it is carried out in the presence of the catalyst as claimed in claim 7.

European Patent Office

**EUROPEAN SEARCH REPORT**

Application number

EP 81 30 4847

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | NL - A - 79 02 534 (STAMICARBON) <br> * Claims 1, 6-11, 13; page 3, lines 12-18; lines 31-36; page 4, line 13 and 31-33; page 6, line 26 - page 7, line 3; page 10, lines 12-16 * | 1-3,7, 8 | C 08 F 10/00 <br> 4/64 <br> 4/02 |
| P | & EP - A - 0 018 025 <br> ---- | | |
| A | DE - A - 2 656 055 (MITSUI) <br> * Claims 1-10 * | 1,3 | |
| D | & JP - A - 79 160 488 <br> ---- | | |
| D,A | CHEMICAL ABSTRACTS, vol. 89, no. 16, 16 October 1978, page 19, abstract no. 130178n <br> COLUMBUS, OHIO (US) <br> & JP - A - 78 00 277 (SHOWA DENKO K.K.) (05-01-1978) | 1,7,8 | TECHNICAL FIELDS SEARCHED (Int.Cl. 3) <br><br> C 08 F 10/00- <br> 10/14 <br> C 08 F 110/00- <br> 110/14 <br> C 08 F 210/00- <br> 210/18 <br> C 08 F 4/64 <br> 4/62 |
| A | CHEMICAL ABSTRACTS, vol.90, no. 22, May 1979, page 25, abstract no. 169320y <br> COLUMBUS, OHIO (US) <br> & JP - A - 79 06 087 (SHOWA DENKO K.K.) (07-01-1979) | 1,7,8 | |
| A | CHEMICAL ABSTRACTS, vol. 89, July 1978, no. 4, pages 20 and 21 abstract no. 25.095k <br> COLUMBUS, OHIO (US) <br> & JP - A - 78 19 395 (SHOWA DENKO K.K.) (22-02-1978) | | |
| A | FR - A - 2 362 868 (MITSUI) <br> * Claims 1-5, 11, 13, 15; page 6, lines 31-35; page 7, line 7 - page 9, line 4; page 13, line 22 - page 14, line 7 * | 1,3 | |
| | & GB - A - 1 564 460 <br> ------ | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 29-01-1982 | WEBER |

EPO Form 1503.1 06.78